# EUROPEAN PATENT SPECIFICATION

(11) **EP 2 071 220 B1**
(45) Date of publication and mention of the grant of the patent: **01.09.2010**
(21) Application number: 07801374.5
(22) Date of filing: 12.09.2007
(51) Int. Cl.: F16K 17/10

(54) **A RELIEF VALVE**
ENTLASTUNGSVENTIL
SOUPAPE DE DECHARGE

(30) Priority: 15.09.2006 DK 200601193
(43) Date of publication of application: 17.06.2009
(73) Proprietor: Valpump Patent GmbH, 6301 Zug (CH)
(72) Inventor: SØRENSEN, Eric Aarestrup, 3060 Espergærde (DK)
(74) Representative: Wittrup, Flemming
(86) International application number: PCT/DK2007/000406
(87) International publication number: WO 2008/031435

(56) References cited:
- EP-A- 1 070 621
- DE-A1- 10 129 822
- US-A- 3 583 432
- US-A- 5 511 581

## Description

The invention relates to a relief valve for relieving the pressure in a tank and comprising a valve seat and a valve body which are coherent with a primary membrane, whose one side is connected to the tank via a pilot passage and whose other side is connected on the one hand to the tank and, on the other, to a relief passage, and comprising a pilot valve unit with at least one pilot membrane configured for opening - by a set pressure - a pilot valve arranged in said pilot passage, said pilot passage having an inlet opening which is coupled to the tank, and an outlet opening.

Such a valve is known from the document US3583432.

Such valves are used in particular for relieving the pressure in tanks, eg onboard a ship. Owing to variations in temperature it is important to be able to ventilate the tanks, but when the materials contained in the tank are combustible, particular severe requirements are made to the functioning of the valve and its ability to resist a fire.

It is particularly dangerous if the tank contains a liquid that emits combustible gases to the effect that the mixture contained in the tank is combustible. This makes requirements both to the relief valve preventing blow-backs of flames from the outside and simultaneously operating with such small differences in pressure for opening and closing that the evaporation from the tank is reduced to a minimum.

Pilot membranes of the kind mentioned above are well known and associated with the advantage that they are able to open very quickly if merely the pressure in the tank is slightly higher than the set pressure. In turn, they are not fire-retardant; rather they are dangerous because of said outlet opening being ventilated to the open. This means that eg a deck fire is able to transplant sideways through the pilot valve to the tank.

It is the object of the invention to provide a relief valve, wherein an improvement of the opening/closing functions is accomplished simultaneously with it providing safety that a fire cannot transplant sideways through the valve.

This object is accomplished in that the relief passage is connected to the open via an excess-pressure valve; and that that outlet opening is connected to the relief passage through the primary membrane and the excess-pressure valve.

By the outlet opening being connected to the relief passage it is accomplished - for as long as the excess-pressure valve is closed - that the pressure in the relief passage increases as a consequence of the gas throughput through the pilot valve. Such pressure increase contributes to opening the primary membrane faster. When the primary membrane opens, the pressure increases rapidly in the relief passage, and the excess-pressure valve opens. At the same time a pressure drop occurs around said outlet opening to the effect that the gas throughput through the pilot valve is increased for further reducing the pressure on the one side of the primary membrane. In this way a quicker and more reliable functioning of the valve according to the invention is accomplished.

In case the emitted gases were to ignite, the prior art would be associated with the risk of blow-back of flames when the pressure and hence the flow rate in the relief passage have dropped. According to the invention, this is avoided by means of the excess-pressure valve which will close before the flames reach anywhere near the relief passage. The outlet opening being connected to the relief passage and the latter being blocked off relative to the surroundings by means of the excess-pressure valve, there is no longer any risk either that a fire may propagate through the pilot valve.

In case of sub-atmospheric pressure, it will prevail at both sides of the primary membrane which will be able to open to the effect that passage is enabled from the tank to the relief passage. In that the relief passage comprises an excess-pressure valve, it will close and prevent back-suction which would be disastrous in case of a deck fire.

According to a preferred embodiment the excess-pressure valve comprises a torpedo-shaped valve body with an essentially vertical axis. It serves to gather the out-flowing gases to a concentrated jet which can be thrown upwards when, in the in-use position, the relief passage faces upwards.

By one embodiment the excess-pressure valve can merely be biased by means of a spring and/or the own weight of the valve body, but in accordance with a preferred embodiment a magnet is also provided, whose magnetic force serves to make the opening pressure higher than the closing pressure. This will contribute to allowing the excess-pressure valve to open slightly later, whereby further improvements of the opening cycle of the valve can be obtained as described above, simultaneously with the valve closing at a relatively lower pressure.

In the following the invention will be explained in further detail with reference to the description of an embodiment, reference being made to the drawing, wherein
Figure 1 is a sectional view through an embodiment, while
Figure 2 is an enlarged sectional view of the embodiment shown in Figure 1.

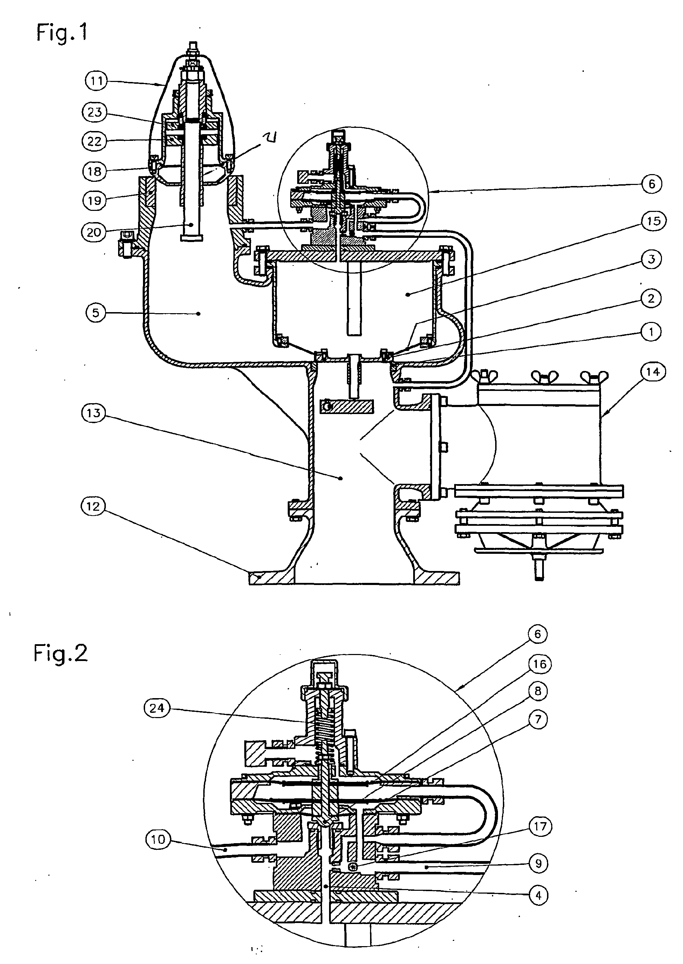

At the bottom, the valve shown in Figure 1 has a flange 12 for attachment of the valve on or in connection with a tank. Typically, the tank is a loading tank in a ship, eg for transporting liquids giving off combustible vapours. Already at this point, it will be understood that severe requirements are made to safety in respect of a relief valve which is to be able to both ventilate the tank in case of super-atmospheric pressure and which is to allow air to enter in case of sub-atmospheric pressure. In case of out-flowing, combustible gases they may be ignited eg by strike of lightning, and in case of vacuum in the tank a deck fire will be able to readily transplant to the combustible gases in the tank.

In normal operation it is also very important that the relief valve acts such that it does not allow more gas to escape than absolutely necessary. If the pressure in the tank becomes unnecessarily low, it will further evaporate of the liquid in the tank. In practice, large amounts of liquid may evaporate in this manner during transport by ship. Therefore, a relief valve to this end should be able to operate within a very small difference in set pressure and closing pressure. In practice the flange 12 is not secured to the tank, but connected thereto via pipe system of a certain length which means that a pressure drop will occur as soon as gas flows through the pipe.

From an overall point of view, very strict requirements are made to safety and operation in respect of relief valves that are used onboard ships. It is to be noted that the invention is also very applicable in connection with shore tanks or for other purposes where severe demands are made of the above kind.

The valve comprises a chamber 13 which is connected to a tank via the flange 12 and is in connection with a vacuum valve 14 which is known per se and which serves the purpose of being activated in case a vacuum occurs in the chamber 13. Such valve 14 also comprises means that are known per se for preventing flames in the surroundings from propagating into the chamber 13.

Moreover, the chamber 13 is connected to a relief valve 5 via a valve that comprises a valve seat 1 and a valve body 2. The valve body 2 is carried by a primary membrane 3 and is journalled such that the valve opens when the membrane is influenced to move upwards. In such case the super-atmospheric pressure from the tank will be able to propagate to the relief passage 5 and from there to the open via an excess-pressure valve 11 as will be described later on. First it will be described below how the valve part 6 shown in Figure 2 functions. In the following that part will be designated the 'pilot valve unit 6' which is connected to the chamber 13 via an inlet opening 9 and is connected to the relief valve 5 via an outlet opening 10 and is finally connected to a chamber 15 which is, in the shown embodiment, delimited downwards by the primary membrane 3.

The pilot valve unit 6 comprises a control membrane 16 and a pilot membrane 7, wherein the top face of the pilot membrane 16 is in connection with the open, while the space between the membranes 7 and 16 is connected to the inlet opening 9 via a throttle means 17. The bottom face of the membrane 7 is also connected to the inlet opening 9, but around the throttle means 17. The valve also comprises a pilot passage 4 which is connected to the pilot chamber 15, to the inlet opening 9 via the throttle means and which is usually upwardly open by means of a pilot valve 8. If the membranes 16 and 7 are moved upwards, the pilot valve 8 will open to the effect that gas is able to flow from the inlet opening 9 to the outlet opening 10.

Moreover, the pilot valve unit 6 comprises a spring 24 which is adjustable and presses the membrane 16 downwards by a predetermined and adjustable force. The membranes are connected to each other via the valve body of the valve 8, which parts are journalled for vertical movement under the influence of the pressure from the spring 24 and the gas pressures on the membranes.

The way in which the pilot valve shown in Figure 2 functions is as follows:
Assuming that the pressure prevailing in the chamber 13 is above atmospheric pressure, but below the set pressure, it will be understood that this pressure also prevails in the chamber 15 and between the membranes 16 and 7. For as long as this pressure is not able to overcome the atmospheric pressure plus the spring force, the pilot valve 6 will be closed, and the primary membrane 3 will see to it that there is no passage between the chamber 13 and the relief passage 5.

The minute the pressure in the chamber 13 increases to above the set pressure, the pressure difference above the membrane 16 will entail that the pilot valve 8 starts to open. The minute this happens, a flow of gas will travel from the inlet opening 9 to the outlet opening 10 and, since it passes the throttle means 17, a lower pressure will prevail downstream thereof than the one prevailing in the inlet opening 9. This difference in pressure quickly comes into existence above the pilot membrane 7, too, whereby the valve body of the pilot valve 8 will be lifted further upwards for further increasing the gas throughput from the inlet opening 9 to the outlet opening 10. In practice this means that the pilot valve 8 opens quite quickly albeit the pressure in the chamber 13 only slightly exceeds the set pressure. Owing to said flow, the chamber 15 will also be evacuated and very quickly cause the membrane 3 to lift the valve body 2 upwards. This is due not only to the chamber 15 being evacuated, but also to the pressure in the relief passage 5 increasing as a consequence of the outlet opening 10 being, in accordance with the invention, connected to the relief passage 5. The described booster-effect accomplished by means of the membranes 16 and 7 are known per se, but one of the advantages of the present invention is that the flow of gas that travels through the pilot valve and which is a prerequisite for the known booster effect, flows into the relief passage 5 and thereby provides a hitherto unknown increased booster effect.

By prior art pilot valves the outlet opening 10 is connected directly to the open, which involves a high risk that a deck fire will propagate backwards through the valve to the tank. This risk does not occur in respect of the present invention due to the fact that the relief passage 5 is terminated by the excess-pressure 11 which both prevents flame blow-back and is the reason why it is possible to build-up a super-atmospheric pressure in the relief passage 5 during the opening movement of the pilot valve 6.

Now, the super-atmospheric pressure 11 will be described in further detail. Exteriorly it has the shape of a torpedo-shaped body which has the known effect that the out-flowing gas is gathered to a concentrated jet which is thrown high into the air. The bottom of the torpedo-shaped body is configured as a valve body 18 which is configured to abut on a valve seat 19. Centrally, a guide 20 is provided which is vertically movable within a spindle guide 21 which is, by means of not shown means, fixated in relation to the valve seat 19. At the top of the spindle guide 21, a magnetic disc 22 is provided which is configured to cooperate with another magnetic disc or a disc of a magnetisable material 23 wherein the latter disc is adjustable in height to the effect that the magnetic attraction force between the discs 22 and 23 can be adjusted to a predetermined value when the valve body 18 abuts on the valve seat 19. It is thus the magnetic force that keeps the valve body 18 down towards the valve seat 19. When the pressure in the relief chamber 5 is able to overcome said magnetic attraction force, the excess-pressure valve 11 will open whereby the disc 23 is caused to be situated at a larger distance from the disc 22 to the effect that the magnetic attraction force decreases and such that the valve 11 is almost instantaneously moved to its top position which allows the largest possible flow.

The magnetic discs 22 and 23 also have the effect that the closing pressure is slightly lower than the opening pressure. However, it is not lower than the flow rate measured at the valve seat 19 always exceeding the propagation rate of flames, if any, to the effect that blow-back of flames cannot occur in a direction down into the relief passage 5.

The excess-pressure valve 11 could also be a purely spring-controlled and/or mass controlled valve, whose opening and closing pressures are essentially the same. This could mean that the excess-pressure valve 11 closes immediately before the pilot valve unit 6 closes. However, when the excess-pressure valve 11 is closed there is no risk of flame blow-back through the relief passage 5 and via the still open valve down to the chamber 13 and the tank.

A combination of a magnetically controlled valve, a spring-controlled and a mass-controlled valve will give the designer a wide degree of freedom to ensure that the excess-pressure valve 11 functions optimally in the context of the pressure and flow conditions that occur in the relief chamber 5 which are, in turn, controlled by the set pressure and the closing pressure of the pilot valve.

The relief passage 5 being closed towards the open by means of an excess-pressure valve and by the outlet opening 10 being connected to the relief passage 5, a valve is accomplished which, compared to the prior art, is both more fire-retardant and operationally more reliable.

## Claims

1. A relief valve for relieving the pressure in a tank and comprising a valve seat (1) and a valve body (2) which are coherent with a primary membrane (3), whose one side is connected to the tank via a pilot passage (4) and whose other side is connected partly to the tank and partly to a relief passage (5), and comprising a pilot valve unit (6) having at least one pilot membrane (7) which is configured to open - by a set pressure - a pilot valve (8) which is arranged in said pilot passage (4), said pilot passage (4) having an inlet opening (9) which is connected to the tank and has an outlet opening (10), **characterised in that** the relief passage (5) is connected to the open via an excess-pressure valve (11); and that the outlet opening (10) is connected to the relief passage (5) between the primary membrane (3) and the excess-pressure valve (11).

2. A relief valve according to claim 1, **characterised in that** the relief passage is, in the in-use position, facing upwards; and that the excess-pressure valve comprises a torpedo-shaped valve body with an essentially vertical axis.

3. A relief valve according to claim 1 or 2, **characterised in that** the excess-pressure valve is biased by means of a spring and/or the weight of the valve body.

4. A relief valve according to claim 1-3, **characterised in that** the excess-pressure valve comprises a magnet, whose magnetic force serves to make the opening pressure exceed the closing pressure.

## Patentansprüche

1. Entlastungsventil zum Ablassen des Drucks in einem Tank und mit einem Ventilsitz (1) und einem Ventilkörper (2), die mit einer Primärmembran (3) in Verbindung stehen, deren eine Seite über einen Vorsteuerkanal (4) mit dem Tank verbunden ist und deren andere Seite teilweise mit dem Tank und teilweise mit einem Entlastungskanal (5) verbunden ist, und mit einer Vorsteuerventileinheit (6), die mindestens eine Vorsteuermembran (7) aufweist, welche dazu konfiguriert ist, durch einen eingestellten Druck ein Vorsteuerventil (8) zu öffnen, das in dem Vorsteuerkanal (4) angeordnet ist, wobei der Vorsteuerkanal (4) eine Einlassöffnung (9), die mit dem Tank verbunden ist, und eine Auslassöffnung (10) aufweist,
**dadurch gekennzeichnet, dass** der Entlastungskanal (5) über ein Überdruckventil (11) ins Freie verbunden ist und dass die Auslassöffnung (10) zwischen der Primärmembran (3) und dem Überdruckventil (11) mit dem Entlastungskanal (5) verbunden ist.

2. Entlastungsventil nach Anspruch 1, **dadurch gekennzeichnet, dass** der Entlastungsdurchgang in der Gebrauchsstellung nach oben weist und dass das Überdruckventil einen torpedoförmigen Ventilkörper mit einer im Wesentlichen vertikalen Achse aufweist.

3. Entlastungsventil nach Anspruch 1 oder 2, **dadurch gekennzeichnet, dass** das Überdruckventil mittels einer Feder und/oder des Gewichts des Ventilkörpers vorgespannt ist.

4. Entlastungsventil nach Anspruch 1-3, **dadurch gekennzeichnet, dass** das Überdruckventil einen Magneten umfasst, dessen Magnetkraft dahingehend wirkt, dass der Öffnungsdruck den Schließdruck übertrifft.

## Revendications

1. Soupape de détente pour détendre la pression dans un réservoir et comprenant un siège de soupape (1) et un corps de soupape (2) qui sont intégrés à une membrane primaire (3), dont un côté est connecté au réservoir par le biais d'un passage pilote (4) et dont l'autre côté est connecté en partie au réservoir et en partie à un passage de détente (5), et comprenant une unité de soupape pilote (6) ayant au moins une membrane pilote (7) qui est configurée pour ouvrir - par une pression fixée - une soupape pilote (8) qui est agencée dans ledit passage pilote (4), ledit passage pilote (4) ayant une ouverture d'entrée (9) qui est connectée au réservoir et qui a une ouverture de sortie (10), **caractérisée en ce que** le passage de détente (5) est connecté à l'air libre par le biais d'une soupape de surpression (11) ; et **en ce que** l'ouverture de sortie (10) est connectée au passage de détente (5) entre la membrane primaire (3) et la soupape de surpression (11).

2. Soupape de détente selon la revendication 1, **caractérisée en ce que** le passage de détente, dans la position d'utilisation, est tourné vers le haut ; et **en ce que** la soupape de surpression comprend un corps de soupape en forme de torpille avec un axe essentiellement vertical.

3. Soupape de détente selon la revendication 1 ou 2, **caractérisée en ce que** la soupape de surpression est poussée au moyen d'un ressort et/ou du poids du corps de soupape.

4. Soupape de détente selon les revendications 1 à 3, **caractérisée en ce que** la soupape de surpression comprend un aimant dont la force magnétique sert à faire en sorte que la pression d'ouverture soit supérieure à la pression de fermeture.
